# EUROPEAN PATENT APPLICATION

(11) **EP 3 023 559 A1**
(43) Date of publication of application: **25.05.2016**
(21) Application number: 14826553.1
(22) Date of filing: 18.04.2014
(51) Int. Cl.: E04D 13/18, H02S 20/23

(54) **SOLAR CELL MODULE ANCHORING DEVICE, ANCHORING METHOD, AND ANCHORING STRUCTURE**

(30) Priority: 19.07.2013 JP 2013151143
(71) Applicant: Solar Frontier K.K., Minato-ku Tokyo 135-8074 (JP)
(72) Inventor: KANBARA, Tatsuji, Tokyo 135-8074 (JP); ITOU, Daisuke, Tokyo 135-8074 (JP)
(74) Representative: Hoffmann Eitle
(86) International application number: PCT/JP2014/061063
(87) International publication number: WO 2015/008516

(57) **Abstract**

A fastening device which adjusts the position of a frame to match the size of a solar cell module and shortens the installation time has been desired. A fastening device 100 which fastens and supports a solar cell module 20 includes a base part 111, a first module support part 113 which has a first support surface 113a able to support a light-receiving surface of the solar cell module and which is provided at the base part, a second module support part 114 which has a second support surface 114a able to support a non-light receiving surface of the solar cell module and which is provided at the base part, wherein the second support surface has a surface area larger than the first support surface and is arranged so that the second support surface is away from the first support surface at a constant interval T2 , and a guide member 212 which can hold the base part in a manner able to be moved in a substantially parallel direction to the first and second support surfaces.

## Description

### Technical Field

The present invention relates to a fastening device which fastens a solar cell module to a roof or other installation surface and a fastening method of a solar cell module which uses the fastening device. Further, the present invention relates to a fastening structure which fastens a plurality of solar cell modules.

### Background Art

In recent years, due to interest in the environment and government policies etc., solar cells are increasingly being installed at public facilities, general homes, and all other locations. A solar cell utilizes sunlight because it is installed outside such as on a roof or a rooftop. To make effective use of the installable surface, a plurality of solar cell modules (also called "solar cell panels") are often aligned to form a solar cell array.

A solar cell module is installed on an installation surface such as a roof of a house or a rooftop of a building. Therefore, it is necessary to use a fastening device comprised of a mounting frame or beam members to firmly fasten it on the installation surface so as to prevent it from being blown off by wind, rain, etc.

For the user of a solar cell module, the efficiency of power generation of the solar cell module and the installation cost are also important. This installation cost is based on not only the price of the solar cell module itself, but also the installation time of the worker installing the solar cell module on an installation surface. What accounts for a large percentage of the installation time of the worker is the time when installing a fastening device on the installation surface. During this, it is necessary to precisely adjust the position of the fastening device to match the size of the solar cell module.

An object of Patent Literature 1 is to provide a mounting frame for installation of a solar cell panel which can keep down the installation cost and shorten the installation time, and discloses a mounting frame for installation of a solar panel which supports a solar cell panel Sp at a slant by provision of a foundation part which is installed on the base surface of a rooftop, a fastened side support base 11 provided standing while formed integrally with the foundation part and with different support rod heights, and a movable side support base 12. The movable side support base 12 of the mounting frame for the installation of the solar cell panel, which is shown in Patent Literature 1, is provided with a height adjustable part 15 which enables the movable foundation part 12a to be moved in accordance with the size of the solar cell to be supported, and which receives and supports the solar cell panel at a predetermined slant angle.

The mounting frame for the installation of the solar cell panel described in Patent Literature 1 has to be installed by a worker in a state while supporting the solar cell panel. Installation work while supporting a solar cell panel becomes complicated work. In the case of work on a home roof, the danger of the work also increases. Further, a holding part 15b which holds the solar cell panel is provided separately from the movable foundation part. That is, the movable foundation part and the holding part 15b are separated in structure, so the work is created of attaching the holding part 15b on the movable foundation part on a roof or other installation surface. The work becomes troublesome.

Further, when installing a solar cell module on a roof or other installation surface, in a snowy region etc., it is necessary to consider the amount of accumulation of snow etc. corresponding to that region, and to determine the performance of the solar cell module. To improve the load performance of the solar cell module, in the past, the solar cell module itself was provided with a reinforcing frame. For example, Patent Literature 2 discloses a solar cell module provided with a reinforcing frame which extends between panel frames (frame members) of the solar cell module so as to cut across the back surface of a solar cell panel and which supports the solar cell panel when the solar cell panel is bent to the back surface side.

However, the load performance of the solar cell module differs in required performance for each region in which it is installed. For example, in a snowy region, a higher load performance is sought compared with a warm region with no snow accumulation. According to a structure which provides a reinforcing frame between the panel frames of the solar cell module described in Patent Literature 2, it is necessary to change the structure of the solar cell module for each installation region (provide the reinforcing frame in snowy regions and not provide the reinforcing frame at non-snowy regions) or to provide all units of the solar cell module with the reinforcing frames so as to enable the solar cell module to be installed in any region. In the former case, it is necessary to change the structure of the solar cell module for each region, so the production process becomes troublesome, while in the latter case, an inherently unnecessary support member is attached even to a solar cell module which is installed in a non-snowy region, so the cost of members becomes higher.

As another structure for improving the load performance of a solar cell module, Patent Literature 3 discloses a solar power system which provides a support member spanning mounting frames which support a solar cell module and which, when the load of snow accumulation etc. causes the solar cell module to bend, uses the support member to support the non-light receiving surface of the solar cell module.

In the solar power system which is disclosed in Patent Literature 3, it is possible to improve the load performance at the mounting frame where the solar cell module is installed, so there is no need to change the structure of the solar cell module itself for each region, that is, it is possible to make the structure of the solar cell module a structure suitable for a non-snowy region and to deal with installation in a snowy region at the mounting frame.

However, in the solar power system disclosed in Patent Literature 3, a support member is provided at the mounting frame for each solar cell module and the same number of support members are required as the solar cell modules. For this reason, there are the problems that processing costs of the support members are incurred and the work at the time of installation becomes troublesome.

### Citation List

### Patent Literature

Patent Literature 1: Japanese Patent Publication No. 2012-104756A
Patent Literature 2: Japanese Patent Publication No. 2011-114035A
Patent Literature 3: International Publication No. 2009/107776A1 pamphlet

### Summary of Invention

### Technical Problem

A fastening device which adjusts the position of a mounting frame to match a size of a solar cell module and which shortens the installation time has been desired.

Further, a fastening structure of a solar cell module which can improve the load performance of the solar cell module while enabling installation more easily has been desired.

### Solution to Problem

The present invention provides a fastening device which fastens and supports a solar cell module comprising a base part, a first module support part which has a first support surface able to support a light-receiving surface of the solar cell module and which is provided at the base part, a second module support part which has a second support surface able to support a non-light receiving surface of the solar cell module and which is provided at the base part, wherein the second support surface has a surface area larger than the first support surface and is arranged so that the second support surface is away from the first support surface at a constant first interval, and a guide member which holds the base part in a manner able to be moved in a substantially parallel direction to the first and second support surfaces.

The present invention further provides the fastening device wherein a difference between a length by which the first support surface supports the solar cell module and a length by which the second support surface supports the solar cell module is larger than a length by which the guide member can move.

The present invention further provides the fastening device which fastens and supports a plurality of solar cell modules, wherein the first module support part has the first support surface able to support a light-receiving surface of a first solar cell module, the second module support part has the second support surface able to support a non-light-receiving surface of the first solar cell module, and the fastening device comprises a third module support part which has a third support surface able to support a light-receiving surface of the second solar cell module and which is provided at the base part at the opposite side of the first module support part and a fourth module support part which has a fourth support surface able to support a non-light-receiving surface of the second solar cell module and which is provided at the base part at the opposite side of the second module support part, wherein the fourth module support part is arranged so that the fourth module support part is away from the third support surface at a constant second interval.

The present invention further provides the fastening device wherein the first module support part is provided at the base part to be able to elastically displace, the second module support part is arranged so that the second support surface is away from the first support surface of the first module support part when not elastically displaced at the constant first interval, the third module support part is provided at the based part to be able to elastically displace, and the fourth module support part is arranged so that the fourth support surface is away from the third support surface of the third module support part when not elastically displaced at the constant second interval smaller than the first interval.

The present invention further provides the fastening device wherein the first interval is larger than a thickness of the solar cell module and the second interval is smaller than the thickness of the solar cell module.

The present invention further provides the fastening device which has a groove between a joined part of the base part and the fourth module support part and the fourth support surface.

The present invention further provides the fastening device wherein the device further comprises of an end cover which seals an opening between the first support surface and the second support surface, an opening between the third support surface and the fourth support surface, and an opening of the groove, the base part is formed with screw holes for fastening the end cover at substantially symmetric positions at the left and right of a centerline of the opening of the groove and the width direction of the base part, and the end cover is formed with an elongated hole symmetric to the left and right of a centerline in the width direction of the end cover corresponding to the screw holes and the opening of the groove.

The present invention further provides the fastening device wherein the device further comprises an end cover which seals an opening between the first support surface and the second support surface, an opening between the third support surface and the fourth support surface, and an opening of the groove, the base part is formed with screw holes for fastening the end cover at substantially symmetric positions at the left and right of a centerline of the opening of the groove and the width direction of the base part, and the end cover is formed with two holes symmetric to the left and right of a centerline in the width direction of the end cover corresponding to the screw holes and the opening of the groove.

The present invention further provides a fastening method using the fastening device to fasten a solar cell module, the fastening method comprising arranging the solar cell module at the second support surface of the second module support part and making the base part move, using the guide member, in a substantially parallel direction to the first and second support surfaces, inserting the solar cell module between the first support surface and the second support surface, and fastening the solar cell module.

The present invention further provides a fastening structure which fastens a consecutively arranged plurality of solar cell modules, comprising a mounting frame which holds pairs of side parts at mutually opposite sides of the solar cell modules and at least one support member which is arranged at non-light receiving surface sides of the solar cell modules and supports a consecutive plurality of non-light receiving surfaces.

The present invention further provides the fastening structure which further comprises a plurality of beam members which fasten the mounting frame and the support member and wherein the mounting frame and the support member are fastened spanning the plurality of beam members.

The present invention further provides the fastening structure wherein the support member has engagement pieces which abut against the beam members, and the beam members have clamping parts which clamp the engagement pieces.

The present invention further provides the fastening structure wherein the support member is an elongated member and wherein the support member is arranged so that an axis of the support member is substantially parallel to the mounting frame.

The present invention further provides the fastening structure wherein the support member is bonded to non-light receiving surfaces of the plurality of solar cell modules by a binder.

The present invention further provides a fastening structure wherein the support member supports non-light receiving surfaces of the plurality of solar cell modules through buffer members.

The present invention further provides the fastening structure wherein the mounting frame includes the fastening device.

### Advantageous Effects of Invention

The fastening device of the solar cell module according to the present invention has a second support surface which has a larger surface area than the first support surface. Further, it is provided with a guide member which holds the base part in a manner able to be moved in a substantially parallel direction to the first and second support surfaces. For this reason, when attaching a solar cell module, the side part of the solar cell module can be placed once at the front end of the second support surface. After that, after placing the solar cell module, then moving the base part, the side part of the solar cell module can be inserted between the first support surface and second support surface to fasten the solar cell module. The worker can fasten the solar cell module without supporting it. Further, positioning the base part to match the size of the solar cell module becomes easy, so the time for the installation work is shortened and the danger at the time of installation can be suppressed.

In the fastening structure of the solar cell module according to the present invention, the support member which is arranged at the non-light receiving surface side of the solar cell module supports non-light receiving surfaces which are consecutively arranged. A plurality of solar cell modules are supported by a single support member, so it is possible to cut the number of support members which were conventionally necessary for each solar cell panel and to cut the number of members which are required when installing solar cell modules and it is possible to simplify the installation work.

### Brief Description of Drawings

FIG. 1 is a perspective view showing a fastening device of a solar cell module according to an embodiment of the invention of the present application.
FIG. 2A is a plan view showing a solar cell module. FIG. 2B is a cross-sectional view along the line B-B of FIG. 2A.
FIG. 3 is a cross-sectional view along the line III-III of FIG. 1 which shows a first mounting frame of the fastening device.
FIG. 4 is a perspective view showing the first mounting frame and a guide member.
FIG. 5A is a view showing the state immediately before fastening a solar cell module to the first mounting frame.
FIG. 5B is a view showing the state of fastening a solar cell module to the first mounting frame.
FIG. 6 is a cross-sectional view along the line IV-IV of FIG. 1 which shows a second mounting frame of the fastening device.
FIG. 7 is a cross-sectional view showing another example of the first mounting frame of a fastening device.
FIG. 8A is a plan view showing an end cover.
FIG. 8B is a front view showing the end cover.
FIG. 8C is a front view showing another example of an end cover.
FIG. 9 is a view showing a state where the end cover is attached to the first mounting frame of the fastening device.
FIG. 10A is a view showing a fastening method for fastening a solar cell module by a fastening device.
FIG. 10B is a view showing the fastening method for fastening the solar cell module by the fastening device.
FIG. 10C is a view showing the fastening method for fastening the solar cell module by the fastening device.
FIG. 10D is a view showing the fastening method for fastening the solar cell module by the fastening device.
FIG. 11 is a perspective view showing a fastening structure for fastening a plurality of consecutively arranged solar cell modules according to a second embodiment of the invention of the present application.
FIG. 12 is a cross-sectional view along the line XII-XII of FIG. 11 which shows a state of a fastening structure fastening a solar cell module.
FIG. 13 is a perspective view showing a state of fastening a support member to a vertical beam member by using a clamping member.
FIG. 14 is a plan view showing a state of attaching the clamping member to the vertical beam member.
FIG. 15A is a side view showing a state of attaching the clamping member to the vertical beam member and showing a state where a hook part of the clamping member is inserted into a hole of the vertical beam member.
FIG. 15B is a side view showing a state of attaching the clamping member to the vertical beam member and showing a state where a fastening piece of the clamping member is inserted into a slit of the vertical beam member.

### Description of Embodiments

Below, referring to the attached drawings, embodiments of the present invention will be explained. In the following embodiments, the same or similar components are assigned common reference notations. To facilitate understanding, these figures are suitably changed in scale. Further, note that the technical scope of the present invention is not limited to these embodiments and extends to the inventions described in the claims and their equivalents.

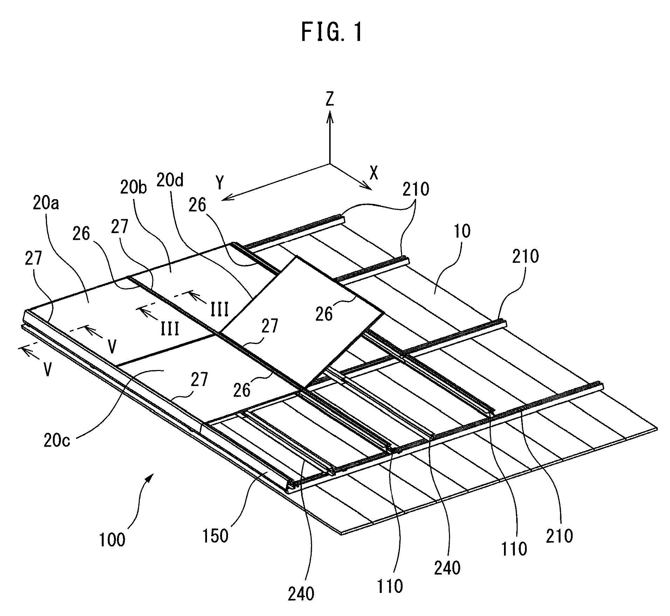

FIG. 1 is a perspective view which shows a fastening device 100 according to an embodiment of the present invention which fastens solar cell modules 20a to 20d (below, sometimes referred to all together as the "solar cell modules 20") on an installation surface 10 of a roof. As shown in FIG. 1, a plurality of solar cell modules 20 are successively arranged on the installation surface 10 in the vertical direction and horizontal direction and are fastened by the fastening device 100 to the installation surface 10. In this Description, as shown in FIG. 1, the slanted direction of the installation surface 10 of the roof, the direction from the upstream side to the downstream side, the direction from the ridge side to the eave side, and the arrow Y-direction of FIG. 1 will be called the "vertical direction", the arrow X-direction of FIG. 1 will be called the "horizontal direction", and the vertically upward direction with respect to the installation surface 10 and the arrow Z-direction of FIG. 1 will be called the "upward direction". Note that, FIG. 1 shows the later explained installation surface 10 and first mounting frames 110, second mounting frame 150, vertical beam members 210, and support rails 240 with part of the solar cell modules 20 which are omitted.

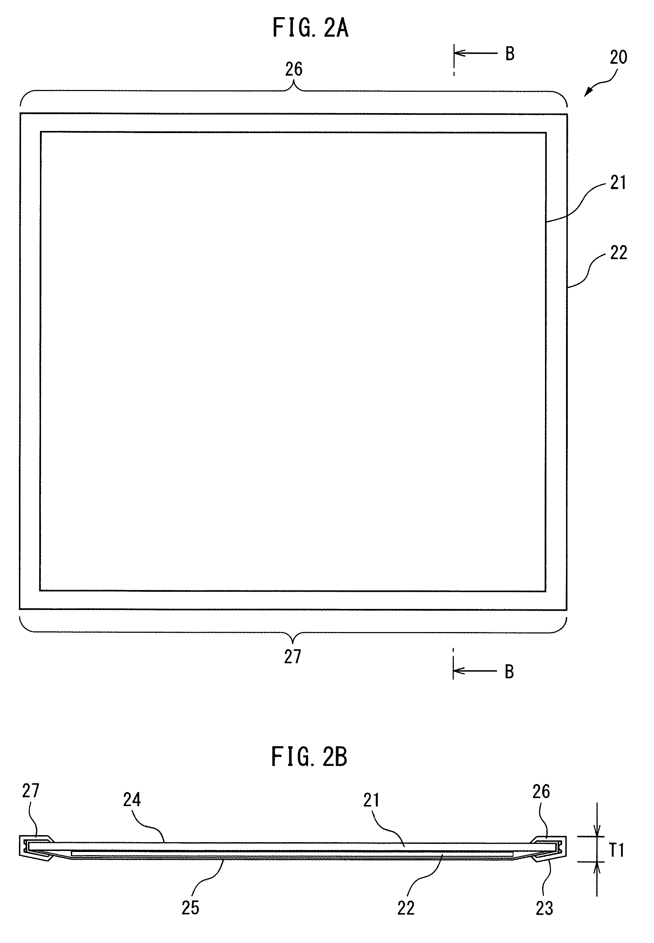

A solar cell module 20 which is fastened by the fastening device 100 of the present embodiment will be explained. FIG. 2A and FIG 2B are a view showing the solar cell module 20, FIG. 2A is a plan view, and FIG. 2B is a cross-sectional view along the line B-B of FIG. 2A. The solar cell module 20 is comprised of a solar cell panel 21, a back surface member 23 which is provided at the back surface of the solar cell panel 21, and a frame member 22 (also called a gasket) which surrounds the solar cell panel 21. The solar cell panel 21 is a panel with is provided with a solar cell device which generates power upon receiving light and suitably has cover glass etc. laid over it to protect this solar cell device and thereby form a light-receiving surface of the solar cell module 20. The solar cell device which is used in the present embodiment may be any of a silicon crystal type (monocrystalline silicon or polycrystalline silicon), amorphous type (amorphous silicon), compound type (CIS, CdTe, GaAs, etc.), or organic type solar cell device etc. The type is not particularly limited. The frame member 22 is made of plastic and protects the circumference of the solar cell panel 21 from damage. In this Description, the surface on which the solar cell panel 21 is provided (including top surface of frame member 22) will be called the "top surface 24" (light-receiving surface), while the surface at the opposite side to the top surface 24 (including also bottom surface of frame member 22) will be called the "bottom surface 25" (non-light receiving surface). One of the side parts of the solar cell module 20 will be called the "first side part 26" while the side part at the opposite side to the first side part 26 will be called the "second side part 27". The illustrated solar cell module 20 is one with end parts at the circumference protected by a frame member 22 made of plastic, but a metal frame member may also be used. Further, as illustrated, the solar cell module 20 has a thickness T1 including the frame member 22.

The fastening device 100 of the present embodiment, as shown in FIG. 1, is a device which fastens a plurality of solar cell modules 20a to 20, which is consecutively arranged, to the installation surface 10. The fastening device 100 is installed on a plurality of vertical beam members 210 which are attached to the installation surface 10 from the upstream side toward the downstream side in the Y-direction of FIG. 1 at predetermined intervals in parallel with each other. The fastening device 100 is provided with a plurality of first mounting frames 110 which fasten and support solar cell modules 20 and guide members 212 which hold the first mounting frames in a manner to be able to move. Further, it is provided with the second mounting frame 150 which is arranged at the eave and fastens and supports the solar cell modules 20.

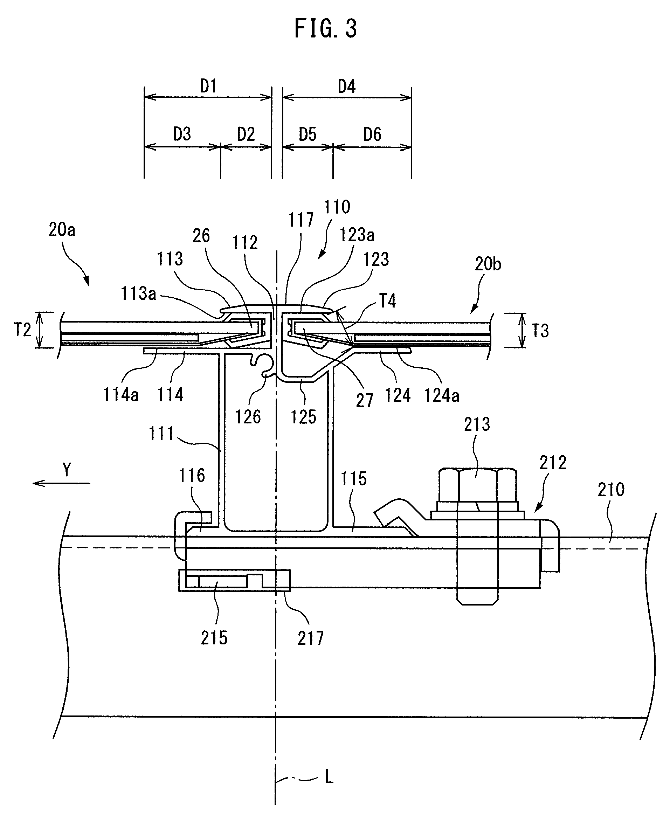

A first mounting frame 110, as shown in FIG. 3, has a base part 111 (including main wall part 112) which is arranged along a first side part 26 of the solar cell module 20a, a first module support part 113 which is provided at the base part 111 and which has a first support surface 113a which can support the top surface (light-receiving surface) of the solar cell module 20a at the first side part 26 side, and a second module support part 114 which has a second support surface 114a that can support the bottom surface (non-light receiving surface) of the solar cell module 20a at the first side part 26 side and which is provided at the base part 111. The second support surface 114a has a surface area larger than the first support surface 113a and is arranged at an interval T2 from the first support surface 113a to enable a first side part 26 of the solar cell module 20a to be clamped. The first module support part 113 and the second module support part 114 extend in the same direction from the base part 111 and is connected to the main wall part 112 to be integrally formed with it.

The length D1 by which the second support surface 114a can support the solar cell module 20a (length D1 by which the second module support part 114 extends from the main wall part 112) is formed longer than the length D2 by which the first support surface 113a can support the solar cell module 20a (length D2 by which the first module support part 113 extends from the main wall part 112). Further, the base part 111 of the first mounting frame 110 is held on a vertical beam member 210 of the installation surface 10 to be able to move in a direction substantially parallel to the first support surface 113a and second support surface 114a, that is, the illustrated arrow Y-direction, by a guide member 212. The interval T2 between the first support surface 113a of the first module support part 113 and the second support surface 114a of the second module support part 114 is preferably substantially the same as the thickness T1 of the solar cell module 20 or is formed to a larger thickness.

The first mounting frame 110 has flange parts 115, 116 which extend from the bottom end of the base part 111. As illustrated, the guide member 212 holds the base part 111 of the first mounting frame 110 through the flange parts 115, 116 to be able to move in a direction substantially parallel to the first support surface 113a and second support surface 114a.

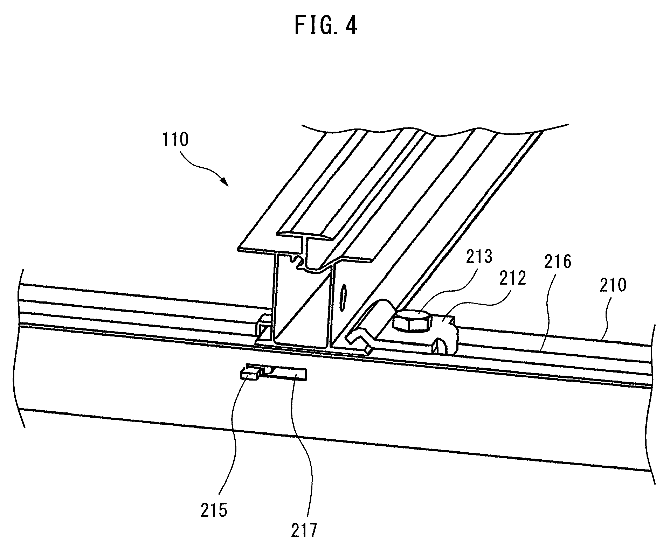

A vertical beam member 210 is a hollow elongated member. As shown in FIG. 4, its top surface has a slit 216 formed along the longitudinal direction. The guide member 212 is configured to move along the slit 216. The guide member 212 is fastened to a vertical beam member 210 by fastening a fastening member 213 (bolt).

At the side part of a vertical beam member 210, as shown in FIG. 3 and FIG. 4, an elongated hole 217 is formed. The guide member 212 has a projecting part 215 which is inserted into the elongated hole 217. The guide member 212 is restricted in range of movement by the projecting part 215 abutting against the end part of the elongated hole 217. By restricting the range of movement of the guide member 212, the range of movement of the first mounting frame 110 is restricted and a worker can be prevented from mistakenly dropping the first mounting frame 110.

The difference D3 of length between the length D1 by which the second support surface 114a of the second module support part 114 can support the solar cell module 20a and the length D2 by which the first support surface 113a of the first module support part 113 can support the solar cell module 20a is preferably longer than the range over which the guide member 212 can move. When detaching a solar cell module 20, if the first mounting frame 110 is slid by a length D3 or more of length to the ridge side (direction opposite to the illustrated Y-direction), there is a possibility that the second module support part 114 cannot support the solar cell module 20 and the solar cell module 20 will fall off. By making the range over which the guide member 212 can move smaller than the difference D3 of length, the solar cell module 20 can be kept from falling off.

The first mounting frame 110 shown in FIG. 3 is configured to support the solar cell module 20a and adjoining solar cell module 20b. The base part 111 is sandwiched between them. The first mounting frame 110 is provided with a third module support part 123 which is provided at the base part 111 at the opposite side to the first module support part 113 and which has a third support surface 123a which can support the top surface (light-receiving surface) of the solar cell module 20b at the second side part 27 side and the first mounting frame 110 is provided with a fourth module support part 124 which is provided at the base part 111 at the opposite side to the second module support part 114 at a constant interval T3 away from the third support surface 123a enabling the second side part 27 of the solar cell module 20b to be clamped and which can support a bottom surface (non-light receiving surface) of the solar cell module 20b at the second side part 27 side. The second side part 27 of the solar cell module 20b is clamped by the third module support part 123 and the fourth module support part 124. The interval T3 between the third support surface 123a and the fourth support surface 124a is preferably formed smaller than the thickness T1 of the solar cell module 20.

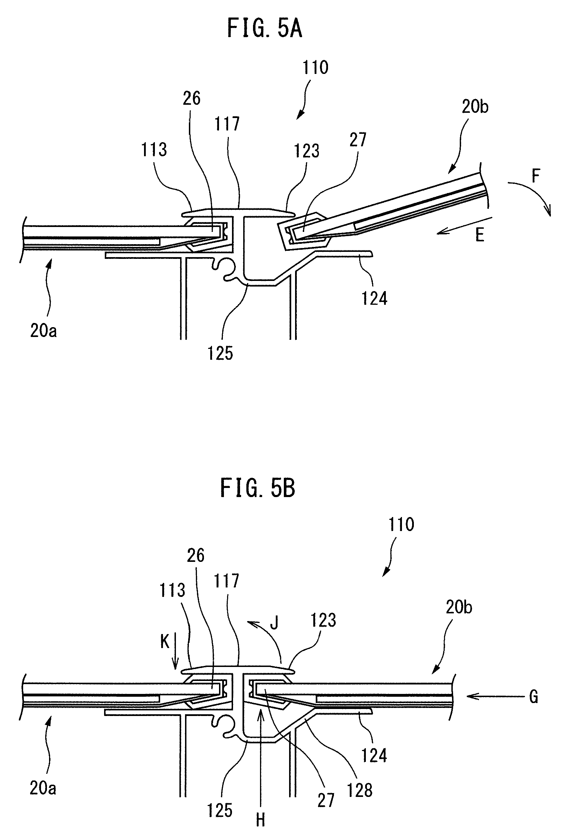

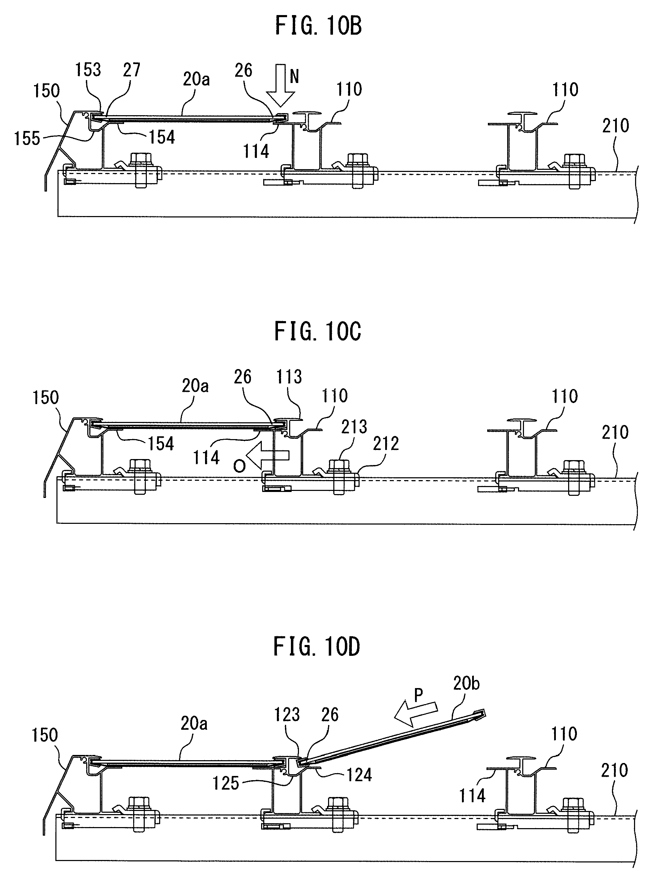

The first mounting frame 110 is formed at the base of the fourth module support part 124 (part connecting fourth module support part 124 and base part 111) with a groove 125 which enables insertion of the second side part 27 of the solar cell module 20b from between the third support surface 123a and the fourth support surface 124a. When attaching the solar cell module 20b to the first mounting frame 110, the groove 125 can be utilized, as shown in FIG. 5A, to insert the solar cell module 20b from an upward slanted direction (arrow E direction of FIG. 5A) between the third support surface 123a and the fourth support surface 124a. By lowering the solar cell module 20b in the arrow F direction after insertion, the first side part 26 of the solar cell module 20b can be placed at the second module support part 114 of the other first mounting frame (see FIG. 10B) and the solar cell module 20b can be installed in parallel with the installation surface 10. Compared with when inserting the solar cell module 20 from a direction parallel to the installation surface 10 (the illustrated Y-direction), the worker is not forced into an unnatural posture and the burden at the time of work is lightened. Further, in the illustrated embodiment, the interval T4 between the groove 125 and the third support surface 123a is formed broader than the interval T3 between the third support surface 123a and the fourth support surface 124a. It is possible to easily insert the second side part 27 of the solar cell module 20b. Further, the groove 125 can be used as a drainage groove.

Further, in the illustrated embodiment, the length D4 by which the fourth module support part 124 extends from the main wall part 112 of the base part 111 is longer than the length D5 by which the third module support part 123 extends from the main wall part 112 of the base part 111. By the fourth module support part 124 being longer than the third module support part 123, for example, before fastening the solar cell module 20, the fourth module support part 124 and the second module support part 114 which supports the other side part can work together to temporarily place the solar cell module 20 on the fastening device 100.

The first module support part 113 and third module support part 123 which are provided at the first mounting frame 110 of the present embodiment are connected with each other. The first module support part 113 is provided elastically displaceably at the base part 111, while the second module support part 114 is arranged with the second support surface 114a at a constant first interval T2 away from the first support surface 113a when not elastically displaced. Further, the third module support part 123 is provided elastically displaceably at the base part 111, while the fourth support surface 124a of the fourth module support part 124 is arranged, at a constant second interval T3 which is smaller than the first interval T2, away from the third support surface of 123a of the third module support part 123 when not elastically displaced. The second interval T3, as shown in FIG. 3, is the distance in the vertical direction between the third support surface 123a and the fourth support surface 124a. Note that, the first interval T2 of the present embodiment is larger than the thickness T1 of the solar cell module 20, while the second interval T3 is smaller than the thickness of the solar cell module T1.

By being configured in this way, if the solar cell module 20a is inserted and supported between the first module support part 113 and second module support part 114, then the solar cell module 20b is inserted between the third module support part 123 and the fourth module support part 124, the top surface of the solar cell module 20b causes the third module support part 123 to be biased in the arrow H direction of FIG. 5B and to rotate in the arrow J direction. In the illustrated embodiment, the contact point 128 of the fourth module support part 124 and the groove 125 (see FIG. 5B) becomes the supporting point and is more strongly pushed up. Due to this, the first module support part 113 descends in the arrow K direction and pushes against the top surface of the first side part 26 of the solar cell module 20a. Due to this pushing action, the solar cell module 20a is more strongly fastened. By just insertion and clamping, there is a possibility that the solar cell module 20a will shift in the horizontal direction, so screws etc. were used to fasten it in some cases. By using the first module support part 113 for pushing to fasten the solar cell module 20a like with the first mounting frame 110 of the present embodiment, shifting or looseness of the solar cell module can be prevented. Further, there is no longer a need to use screws etc. to fasten the solar cell module and the work time can be shortened.

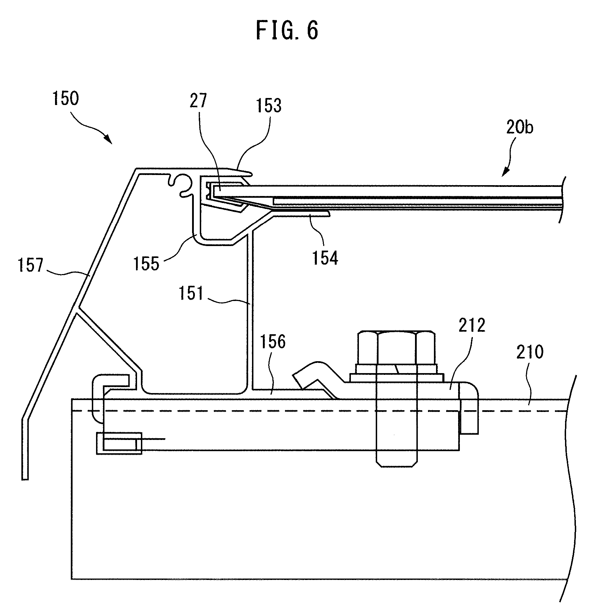

FIG. 6 shows one example of the second mounting frame 150 which holds the second side part 27 of the solar cell module 20a. The second mounting frame 150 is provided with a base part 151, a third module support part 153 which is provided at a top end of the base part 151 and which has a third support surface 153a that can support the top surface at the second side part 27 side of the solar cell module 20a, and a fourth module support part 154 which has a fourth support surface 154a that can support the bottom surface of the solar cell module 20a at the second side part 27 side and which is arranged so that the fourth support surface 154a is spaced from the third support surface 153a at a constant interval T3 so as to clamp the second side part 27 of the solar cell module 20a. The second mounting frame 150 is sometimes provided at the eave side of the roof. To improve the appearance, a cosmetic board 157 is applied at the eave side of the second mounting frame 150. Further, the second mounting frame 150 is formed at the base of the fourth module support part 154 with a groove 155 which enables insertion of the second side part 27 of the solar cell module 20a from between the third support surface 153a and the fourth support surface 154a. In the same way as the groove 125 which is shown in FIG. 3, the groove 155 can also be utilized as a drainage groove.

The bottom end of the base part 151 is provided with a flange part 156. The second mounting frame 150 is fastened through the flange part 156 to the vertical beam member 210. In the illustrated embodiment, the second mounting frame 150, like the first mounting frame 110, uses the guide member 212 for fastening to the vertical beam member 210, but the second mounting frame 150 need not move. Bolts etc. may also be used to directly fasten it to the vertical beam member 210.

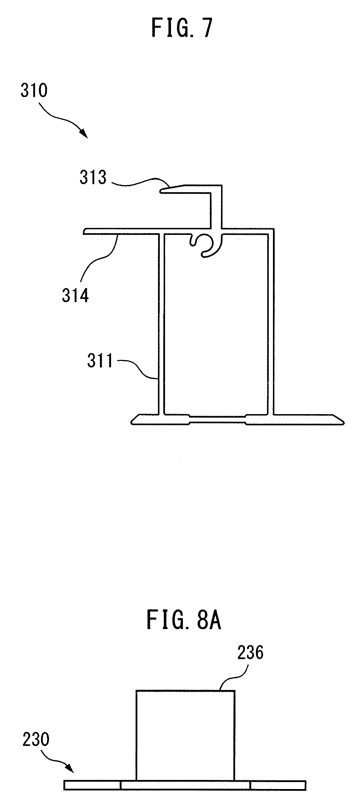

FIG. 7 shows a first mounting frame 310 of another example of the first mounting frame 110. The first mounting frame 110 shown in FIG. 3 was provided with the third module support part 123 and fourth module support part 124 for fastening a plurality of solar cell modules. However, for example, the first mounting frame which supports the last solar cell module which is arranged at the uppermost upstream side does not have to support the second side part of an adjoining solar cell module, so the third module support part 123 and fourth module support part 124 can be omitted. The first mounting frame 310 is provided with a base part 311, a first module support part 313 which has a first support surface 313a that can support a solar cell module and which is provided at the base part 311, and a second module support part 314 which has a second support surface 314a that can support a solar cell module and which is provided at the base part 311. The second support surface 314a has a larger surface area than the first support surface 313a and is arranged at a constant first interval T2 from the first support surface 313a.

The first mounting frame 110 shown in FIG. 3 and the second mounting frame 150 shown in FIG. 6 clamp the side part of the solar cell module 20 from above and below and fasten the solar cell module 20 by only friction in the longitudinal direction of the first mounting frame 110 (X direction of FIG. 1). For this reason, when years elapse from installation of a solar cell module 20, the solar cell module 20 moves in the longitudinal direction of the first mounting frame 110 and second mounting frame 150 (horizontal direction or X direction) and may stick out from the first mounting frame 110 or the second mounting frame 150. To eliminate this, the solar cell module 20 is attached, then an end cover is attached to the first mounting frame 110 and second mounting frame 150 so as to close the opening between the first support surface 113a and second support surface 114a, the opening between the third support surface 123a and fourth support surface 124a, and the opening of the groove 125 and movement of the solar cell module in the horizontal direction is prevented. In the past, when attaching the end cover to the mounting frame, since the positions of the screw holes differ at the left and right end parts of the mounting frame, the end cover 230 had to be formed matching the positions of the screw holes at the end parts.

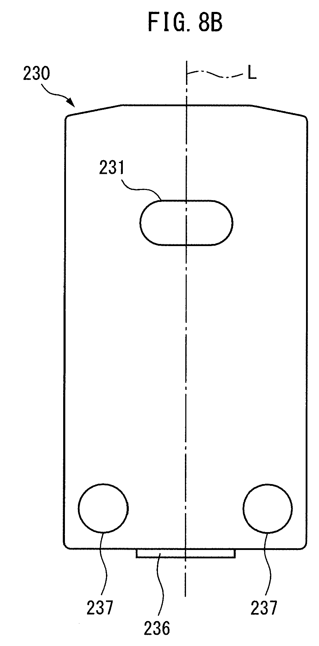

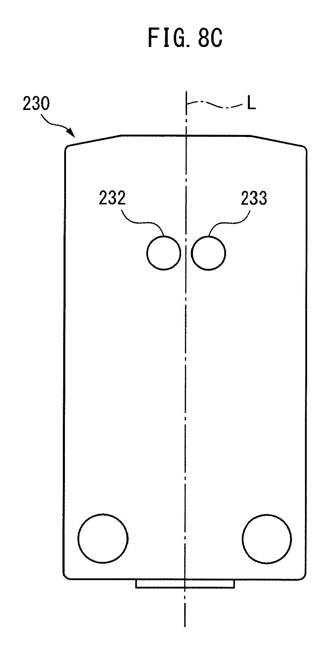

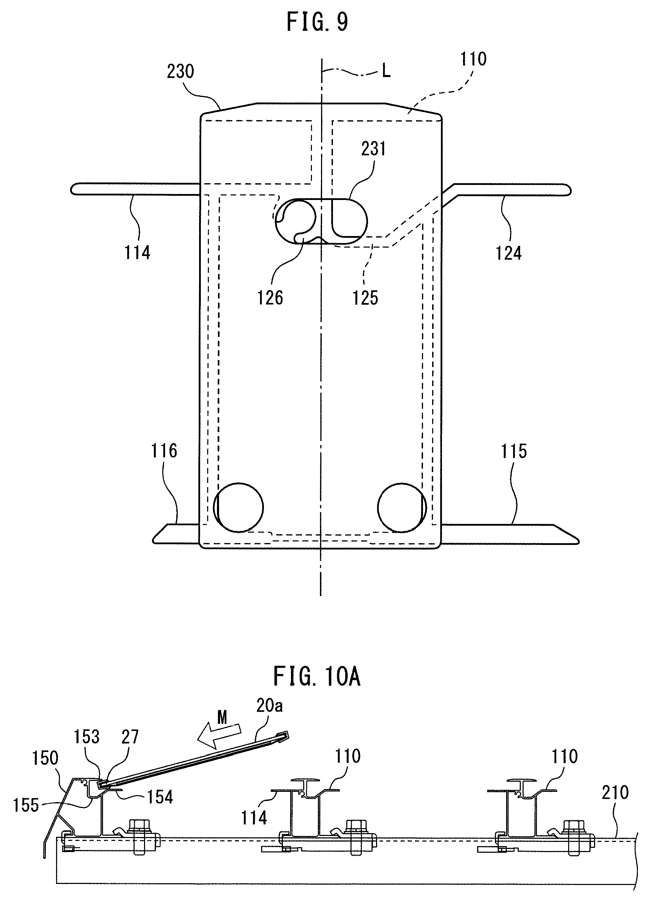

FIG. 8 is a view showing the end cover 230 which is attached to an end part of the first mounting frame 110 of the present embodiment, wherein FIG. 8A is a plan view, FIG. 8B is a front view, and FIG. 8C is a front view showing another example. FIG. 9 is a view showing the state where the end cover 230 is attached to the end part of the first mounting frame 110.

The first mounting frame 110, as explained above, is formed with the groove 125 and a screw hole 126 for attaching the end cover 230 at positions substantially symmetric to the left and right about the center line L in the width direction of the base part 111 (see FIG. 3). Further, the end cover 230 is formed so that when attaching the end cover 230 to the first mounting frame 110, the elongated hole 231 which connects the screw hole 126 and the groove 125 becomes symmetric to the left and right about the center line L in the width direction of the end cover 230. In the illustrated embodiment, the elongated hole 231 is formed, but as shown by the end cover 230a shown in FIG. 8C, two holes 232, 233 may be formed at positions symmetric to the left and right about the center line L in the width direction. By forming the elongated hole 231 and the holes 232, 233 like in the end covers 230, 230a of the illustrated embodiment, it is possible to make common use of the end covers 230, 230a which close the two ends of the first mounting frame 110. Further, the rainwater which flows into the groove 125 can be drained from the elongated hole 231 of the end cover 230 connected to the groove, or the hole 232 or the hole 233 of the end cover 230a.

The end covers 230, 230a are provided with leg parts 236 so that the end covers 230, 230a can stand when attaching them to the first mounting frame 110. At the bottom end parts of the end covers 230, 230a, two drainage holes 237 are formed for draining water which flows to the inside of the base part 111 of the first mounting frame 110.

The fastening device 100 of the present embodiment is a structure using the first mounting frames 110 and the second mounting frame 150 to support two facing side parts of a solar cell module (first side part 26 and second side part 27). The other two side parts of the solar cell module other than the first side part 26 and second side part 27 are not supported, so the load performance of the solar cell module deteriorates compared with the case where all of the four side parts surrounding the solar cell module are supported. To improve this load performance, as shown in FIG. 1, the fastening device 100 of the present embodiment may be provided with support rails 240 (support members) which support the bottom surfaces of the solar cell modules 20. The support rails 240 shown in FIG. 1 are provided in the horizontal direction (X direction) spanning the first mounting frames 110 and the second mounting frame 150, two first mounting frames 110, or two or more vertical beam members 210. The method of installation of the support rails 240 is not limited to this. The support rails 240 can also be directly arranged at the installation surface 10. Further, they may be arranged spanning the first mounting frame 110 and the second mounting frame 150, or two first mounting frames 110.

Referring to FIGS. 10A to 10D, the method of fastening a solar cell module 20 using the fastening device 100 of the present embodiment will be explained.

A plurality of vertical beam members 210 are arranged on the installation surface 10 in parallel to each other in the vertical direction. Next, the second mounting frame 150 is arranged at the eave side and is fastened on the vertical beam members 210.

The plurality of first mounting frames 110 are arranged on the vertical beam members 210. Each first mounting frame 110 is then attached in a slidable manner using a guide member 212.

As shown in FIG. 10A, between the third module support part 153 and the fourth module support part 154 of the second mounting frame 150, the second side part 27 of the solar cell module 20a is inserted toward the groove 155 from the upward slanted direction (the illustrated arrow M direction).

After the second side part 27 is inserted deep into the groove 155, as shown in FIG. 10B, the solar cell module 20a is lowered downward (the illustrated arrow N-direction) and the first side part 26 of the solar cell module 20a is placed on the front end of the second module support part 114 of the first mounting frame 110.

Next, the first mounting frame 110, as shown in FIG. 10C, is made to move in the vertical direction (the illustrated arrow O direction), the first side part 26 of the solar cell module 20a is inserted between the first support surface 113a of the first module support part 113 and the second support surface 114a of the second module support part 114, and the first module support part 113 and the second module support part 114 are used to clamp the first side part 26. After that, the fastening member 213 of the guide member 212 is fastened to fasten the guide member 212 to the vertical beam member 210. Due to this, the fastening operation of the solar cell module 20a is ended.

After this, as shown in FIG. 10D, between the third support surface 123a of the third module support part 123 and the fourth support surface 124a of the fourth module support part 124 of the first mounting frame 110, the first side part 26 of the solar cell module 20b is inserted toward the groove 125 in the upward slanted direction (the illustrated arrow P direction). After this, the same process as the solar cell module 20a which is shown in FIG. 10A is performed to fasten the solar cell module 20b.

Above, a fastening device of the solar cell module according to the present embodiment and a fastening method using this fastening device were explained with reference to the drawings.

In the present embodiment, the first side part of the solar cell module 20a which is arranged at the downstream side and the second side part of the solar cell module 20b which is arranged at the upstream side were fastened using a single first mounting frame, but the first mounting frame which supports the first side part and the second mounting frame which supports the second side part may be separately provided.

A plurality of vertical beam members which were arranged in the vertical direction at the installation surface were used to attach the first mounting frames and second mounting frame to the installation surface, but it is also possible to install horizontal beam members which are arranged in the horizontal direction at the installation surface and to install the first mounting frames and second mounting frame on the horizontal beam member to be able to slide in the horizontal direction.

The first mounting frames can be installed on the installation surface, then the solar cell modules can be placed on the frames and the first mounting frames can be moved from that state to finely adjust the installation positions of the first mounting frames. For this reason, it becomes possible to simplify the fastening work of solar cell modules and thereby becomes possible to shorten the installation work time and keep down the danger at the time of installation work.

Next, a fastening structure of consecutively arranged solar cell modules according to a second embodiment of the invention of the present application will be explained using the drawings.

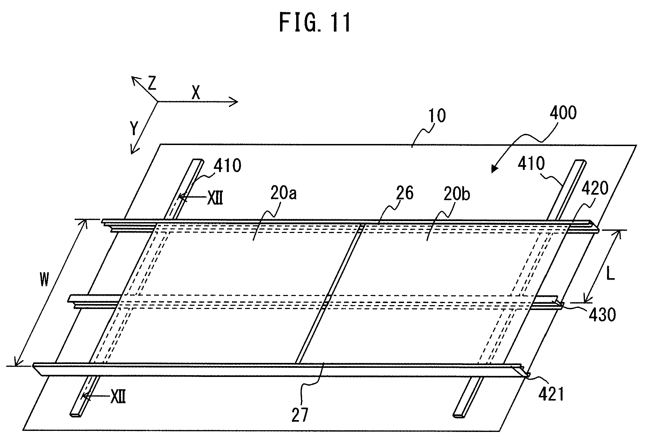

FIG. 11 is a perspective view which shows a fastening structure 400 which fastens two consecutively arranged solar cell modules 20a, 20b on an installation surface 10 of a roof. As shown in FIG. 11, the solar cell modules 20a, 20b are arranged consecutively in the horizontal direction (the illustrated the arrow X direction) and are fastened by the fastening structure 400. Note that, in the same way as FIG. 1, the slanted direction of the installation surface 10 of the roof, the direction from the upstream side to the downstream side, the direction from the ridge side to the eave side, and the arrow Y direction of FIG. 11 will be called the "vertical direction", the arrow X direction of FIG. 11 will be called the "horizontal direction", and the vertical upward direction with respect to the installation surface 10 and arrow Z direction of FIG. 11 will be called the "upper direction".

The solar cell modules 20a, 20b which are fastened by the fastening structure 400 of the present embodiment are similar to the solar cell modules 20 shown in FIG. 2, so detailed explanations will be omitted.

The fastening structure 400 of the present embodiment, as shown in FIG. 11, is a fastening structure which fastens a consecutively arranged plurality of solar cell modules 20a, 20b to the installation surface 10. The fastening structure 400 is provided with a first mounting frame 420 and a second mounting frame 421 which hold a pair of first side parts 26 and second side parts 27 at opposite sides of a plurality of solar cell modules 20 and with a support member 430 which is arranged at non-light receiving surface sides of a plurality of solar cell modules and which supports the consecutive plurality of non-light receiving surfaces. Further, the fastening structure 400 of the illustrated embodiment is further provided with a plurality of vertical beam members 410 (beam members). The first mounting frame 420, second mounting frame 421, and support member 430 are fastened by the plurality of vertical beam members 410.

The plurality of vertical beam members 410 are attached to the installation surface 10 from the upstream side to the downstream side in the Y-direction of FIG. 11 at predetermined intervals so as to become parallel with each other. Note that, the vertical beam members 410 are provided for adjusting unevenness of the installation surface 10. When the installation surface 10 is flat, the vertical beam members 410 need not be provided. The first mounting frame 420, second mounting frame 421, and support member 430 may be directly fastened to the installation surface 10. Further, the vertical beam members 410 of the illustrated fastening structure 400 are fastened to the installation surface 10 by bolts or other fasteners. Further, the location where the vertical beam members 410 are fastened is not limited to the installation surface 10. The vertical beam members 410 may, for example, be fastened by a plurality of support rods which are inserted into the ground. Further, the vertical beam members 410 may be horizontal beam members which extend in the horizontal direction (arrow X direction) of the installation surface 10. The direction in which the vertical beam members 410 are installed is not limited. In the case of horizontal beam members, the first mounting frame 420, second mounting frame 421, and support member 430 are installed so as to extend from the upstream side toward the downstream side in the Y-direction of FIG. 11. Further, the vertical beam members 410 of the illustrated embodiment are hollow elongated members and have top surfaces 416 on which the mounting frames 420, 421 and the support member 430 can be arranged.

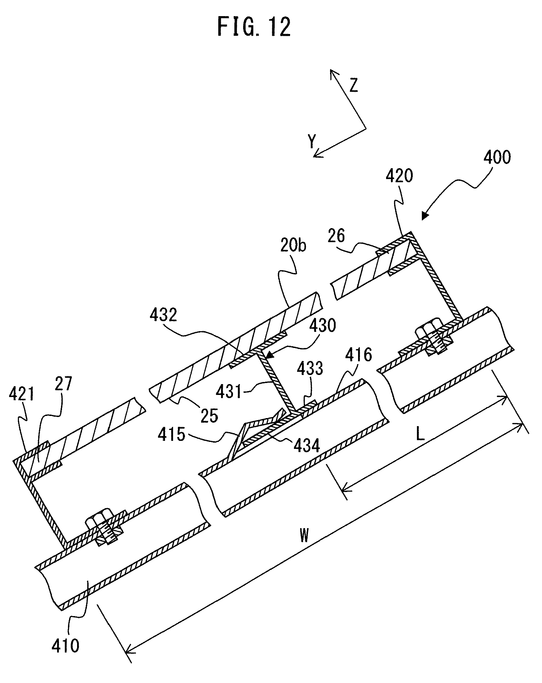

As shown in FIG. 12, the structure by which the first mounting frame 420 and second mounting frame 421 hold solar cell modules 20 in the fastening structure 400 may have a structure which holds and fastens the pair of side parts 26, 27 of the consecutively arranged plurality of solar cell modules. The structure by which the first mounting frame 420 holds the side parts 26, 27 of the solar cell modules 20 is not limited. The first mounting frame 420 and second mounting frame 421 may also be the first mounting frame 110 and second mounting frame 150 shown in FIGS. 1 and 3 to 7.

The support member 430 of the fastening structure 400 is a long length elongated member. As explained above, it is provided at the non-light receiving surface sides of the plurality of consecutive solar cell modules 20a, 20b and supports the consecutive non-light receiving surfaces. The support member 430 is provided spanning a plurality of vertical beam members 410. In the figure, the non-light receiving surfaces 25 of two solar cell modules 20a, 20b are supported, but the non-light receiving surfaces 25 of three or more consecutive solar cell modules 20 in the horizontal direction may also be supported. Further, in the illustrated embodiment, the support member 430 is attached spanning two vertical beam members 410, but when three or more vertical beam members 410 are installed, it may also be attached spanning all of these vertical beam members.

In the past, each solar cell module 20 was provided with a support member spanning mounting frames supporting the pair of side parts of the solar cell module. The support member 430 of the fastening structure 400 of the solar cell modules according to the present embodiment supports the non-light receiving surfaces 25 of a consecutively arranged plurality of solar cell modules 20, so it is possible to cut the number of members required for installation of solar cell modules 20 and possible to greatly decrease the trouble of attachment compared with when attaching a support member to each solar cell module.

The support member 430 of the illustrated embodiment is arranged at the non-light receiving surface 25 sides of the solar cell modules 20 so that the axis of the support member 430 becomes substantially parallel to the first mounting frame 420 and second mounting frame 421. That is, the support member 430 is arranged in the space between the first mounting frame 420 and the second mounting frame 421 so as to become substantially parallel to the first side parts 26 and the second side parts 27 of the solar cell modules.

By arranging the support member 430 parallel to the mounting frames, the distance L from the first mounting frame 420 becomes constant. For example, the positions of the clamping parts (details explained later) which are used when attaching the support member 430 to the beam members can be made the same. For this reason, there is no need to prepare a plurality of types of the vertical beam members 410 which differ in positions of attachment of the support member 430. It is sufficient to prepare a single type of vertical beam members 410. Since there is no need to prepare a plurality of types of vertical beam members, the cost of the materials can be lowered.

Further, the distance L between the support member 430 and the first mounting frame 420 becomes about half of the distance W between the first mounting frame 420 and the second mounting frame 421. When the solar cell module is deformed due to accumulation of snow, that is, when it bends downward, the position where the load acts the most is the center part of the solar cell module (intermediate point between first mounting frame 420 and second mounting frame 421). By arranging a support member in that vicinity, it is possible to efficiently support the solar cell module. However, the distance L of the support member 430 from the first mounting frame 420 is not limited to this. It is also possible to arrange the solar cell module at the point making the load performance the highest in accordance with the load which is applied to the solar cell module. The distance L from the first mounting frame 420 may also be, for example, a distance between 1/3 to 2/3 of the distance W.

Further, when a single support member 430 is insufficient for the required load performance, two or more support members 430 may be arranged in the space between the first mounting frame 420 and the second mounting frame 421. The two or more support members 430 may also be arranged to become parallel to each other. Further, the two or more support members may be arranged intersecting each other.

Next, the shape of the support member 430 will be explained. The support member 430 is, as shown in FIG. 11, an elongated member and is made of metal and fabricated by working steel. As shown in FIG. 12, the support member 430 has an H-shaped cross-section. It is provided with a main body 431, a support part 432 which is formed in a flange shape from the top end of the main body 431 and which abuts against the non-light receiving surface 25 of the solar cell module 20, and a fastening part 433 which is formed in a flange shape from the bottom end of the main body 431 and which is fastened to a vertical beam member. The widths of the flange part which extends to the upstream side of the support part 432 and the flange part which extends to the downstream side are substantially the same extending widths. On the other hand, the extending widths of the flange part which extends to the upstream side of the fastening part 433 which is formed at the bottom end and the flange part which extends to the downstream side differ. The flange which extends to the downstream side is longer than the flange part which extends to the upstream side. Due to this, when, at the time of installation, the support member 430 is placed on the vertical beam members 410, the support member 430 becomes resistant to falling down to the downstream side. Further, in the present embodiment, the flange part which sticks out to the downstream side of the fastening part 433 functions as an engagement piece 434 which is inserted into and clamped by the clamping part 415 of the vertical beam member. Further, the support member 430 of the present embodiment has an H-shaped cross-section, but the cross-sectional shape is not limited to this. The member may also be formed by a solid or hollow square cross-section.

The support part 432 and the non-light receiving surface 25 of the solar cell module 20 are structured to directly abut against each other for support. The support part 432 and the non-light receiving surface 25 may be bonded using a binder, for example, two-sided tape etc. By the support part 432 and the non-light receiving surface 25 being bonded, it is possible to counter even the load acting in the upward direction (negative load) due to wind blown from the non-light receiving surface side of the solar cell module. Therefore the load performance of the solar cell module can be improved. Further, a buffer member, for example, sponge, rubber, etc., is placed between the support part 432 and the non-light receiving surface 25 and the support member 430 may support the solar cell module 20 through the buffer member. By providing the buffer member, damage to the solar cell module 20, etc., can be prevented.

The support member 430 shown in FIG. 12 directly abuts against the non-light receiving surfaces 25 of the solar cell module 20. In the case where the solar cell module 20 is not subjected to the load of accumulated snow etc., the module may be installed while providing clearance between the non-light receiving surfaces 25 and the support part 432 of the support member 430. In this case, when accumulated snow etc. causes the solar cell module 20 to deform, that is, to bend to the non-light receiving surface side, the non-light receiving surface 25 contacts the support part 432 and the support member 430 supports the solar cell module 20. By providing the clearance, for example, it is possible to keep to a minimum the effect which the support member has on the solar cell module 20 due to deformation due to heat expansion etc.

The support member 430, in the same way as the first mounting frame 420 and second mounting frame 421, may be fastened to a vertical beam member 410 using a bolt or other fastener. However, the support member 430 may also be fastened by a simpler method so as to facilitate installation since not as much load is applied as the first mounting frame 420 or second mounting frame 421 which holds the side parts 26, 27 of the solar cell module 20. The top surface 416 of a vertical beam member 410 of the illustrated embodiment is formed with a clamping part 415 which is cut out into a tongue shape. By inserting an engagement piece 434 which is formed at the bottom end of the support member 430 which abuts against the vertical beam member 410 between the clamping part 415 and the top surface 416 of the beam member 410, the support member 430 is fastened to the vertical beam member 410. The support member 430 can be placed on the vertical beam member 410, then the support member 430 can be made to move to the downstream side (the illustrated arrow Y-direction) to insert the engagement piece 434 in the clamping part 415. There is no need for work to for example insert a bolt in a bolt hole for fastening the support member 430, so it is possible to cut the work time for fastening the support member 430 to a vertical beam member 410.

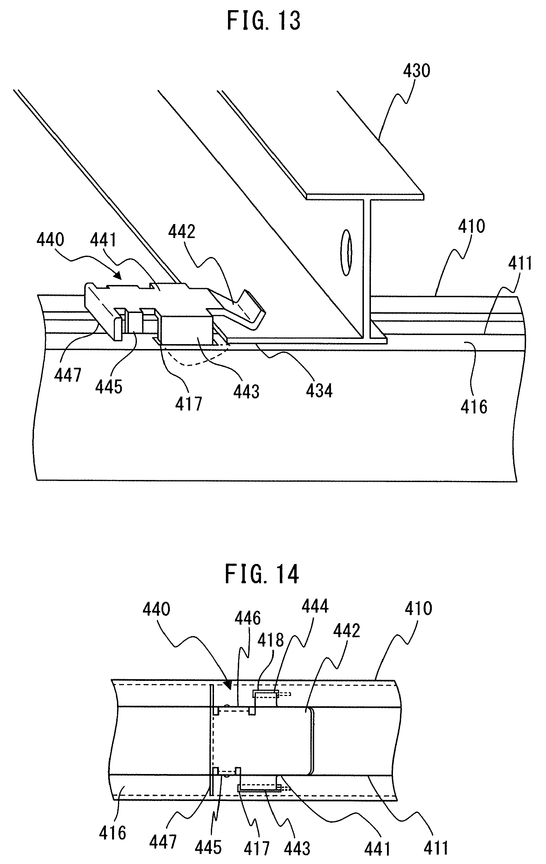

Another example of the clamping part 415 will be explained referring to FIGS. 13 to 15B. The clamping part 415 shown in FIG. 12 is formed integrally with a vertical beam member 410 by cutting out part of the top surface 416. For this reason, for example, if the clamping part 415 breaks, the vertical beam member has to be replaced with alternate vertical beam member. The clamping part shown in FIG. 13 is realized by applying the part for clamping the support member to a clamping member 440 which is different from the vertical beam member 410. By making the vertical beam member 410 and the clamping member 440 separate members, even if a clamping member 440 breaks, it is possible to deal with this by just replacing the clamping member 440. Further, there is no need to provide clamping parts at all of the vertical beam members. By attaching the clamping members 440 only when installing a support member 430, the number of members can be cut.

The clamping member 440 shown in FIG. 13 is provided with a main body 441, a clamping part 442 which extends from one end part of the main body 441 and which clamps an engagement piece 434 of the support member 430, two hook parts 443, 444 which extend downward from the two side parts of the main body 441, two fastening pieces 445, 446, and a stopper 447 which is provided at the other end part of the main body 441. The vertical beam members 410, as shown in FIG. 13 and FIG. 14, is formed with a slit 411 at the top surface 416. Further, at the top surface 416 at the position for attachment of the clamping member, two cutout holes 417, 418 are formed. The hook parts 443, 444 are attached by hooking the front ends inserted into the cutout holes 417, 418 at the back side of the top surface 416 of the vertical beam member 410.

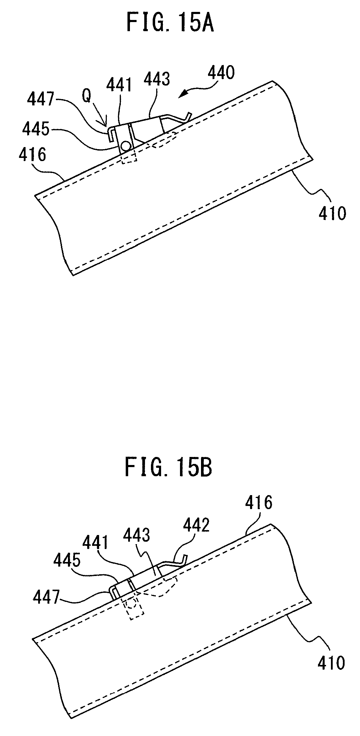

The fastening pieces 445, 446, as shown in FIG. 14, are provided matching the width of the slit 411 and, as shown in FIG. 15A, FIG. 15B, are designed so that the projecting parts of their front ends are hooked at the back side of the top surface 416 at the two sides of the slit 411. The stopper 447 provided at the other end part of the main body 441 is formed to have a width greater than the width of the slit 411. For this reason, as shown in FIG. 15A, when pushing the clamping member 440 in the arrow Q direction, the main body 441 of the clamping member 440 will not enter the slit 411 as shown in FIG. 15B.

The clamping member 440 shown in FIG. 13 can be attached without using bolts or other fasteners by inserting the hook parts or fastening pieces to cutout holes or slits, so it is possible to easily form a clamping parts for attaching a support member and in turn to simply attach a support member.

Above, the fastening structure of a solar cell module according to the embodiments were explained with reference to the drawings.

### Reference Signs List

10. installation surface
20, 20a, 20b, 20c, 20d. solar cell module
21. solar cell panel
22. frame member
23. back surface member
24. top surface (light-receiving surface)
25. bottom surface (non-light receiving surface)
26. first side part
27. second side part
100. fastening device
110. first mounting frame
111, 151, 311. base part
117. connecting part
113. first module support part
113a. first support surface
114. second module support part
114a. second support surface
115, 116. flange part
123, 153. third module support part
123a, 153a. third support surface
124, 154. fourth module support part
124a, 154a. fourth support surface
150. second mounting frame
210. vertical beam member
212. guide member
216. slit
230. end cover
231. elongated hole
240. support rail (support member)
410. vertical beam members
411. slit
415. clamping part
416. top surface
420. first mounting frame
421. second mounting frame
430. support member
431. main body
432. support part
433. fastening part
434. engagement piece
440. clamping member

## Claims

1. A fastening device which fastens and supports a solar cell module comprising
a base part,
a first module support part which has a first support surface able to support a light-receiving surface of the solar cell module and which is provided at the base part,
a second module support part which has a second support surface able to support a non-light receiving surface of the solar cell module and which is provided at the base part, wherein the second support surface has a surface area larger than the first support surface and is arranged so that the second support surface is away from the first support surface at a constant first interval, and
a guide member which holds the base part in a manner able to be moved in a substantially parallel direction to the first and second support surfaces.

2. The fastening device according to claim 1, wherein a difference between a length by which the first support surface supports the solar cell module and a length by which the second support surface supports the solar cell module is larger than a length by which the guide member can move.

3. The fastening device according to claim 1 or 2 which fastens and supports a plurality of solar cell modules, wherein
the first module support part has the first support surface able to support a light-receiving surface of a first solar cell module,
the second module support part has the second support surface able to support a non-light-receiving surface of the first solar cell module, and
the fastening device comprises
a third module support part which has a third support surface able to support a light-receiving surface of the second solar cell module and which is provided at the base part at the opposite side of the first module support part and
a fourth module support part which has a fourth support surface able to support a non-light-receiving surface of the second solar cell module and which is provided at the base part at the opposite side of the second module support part, wherein the fourth module support part is arranged so that the fourth module support part is away from the third support surface at a constant second interval.

4. The fastening device according to claim 3, wherein
the first module support part is provided at the base part to be able to elastically displace,
the second module support part is arranged so that the second support surface is away from the first support surface of the first module support part when not elastically displaced at the constant first interval,
the third module support part is provided at the based part to be able to elastically displace, and
the fourth support surface of the fourth module support part is arranged so that the fourth support surface is away from the third support surface of the third module support part when not elastically displaced at the constant second interval smaller than the first interval.

5. The fastening device according to claim 4, wherein the first interval is larger than a thickness of the solar cell module and the second interval is smaller than the thickness of the solar cell module.

6. The fastening device according to any one of claims 3 to 5, which has a groove between a joined part of the base part and the fourth module support part and the fourth support surface.

7. The fastening device according to claim 6, wherein
the device further comprises an end cover which seals an opening between the first support surface and the second support surface, an opening between the third support surface and the fourth support surface, and an opening of the groove,
the base part is formed with screw holes for fastening the end cover at substantially symmetric positions at the left and right of a centerline of the opening of the groove and the width direction of the base part, and
the end cover is formed with an elongated hole symmetric to the left and right of a centerline in the width direction of the end cover corresponding to the screw holes and the opening of the groove.

8. The fastening device according to claim 6, wherein
the device further comprises an end cover which seals an opening between the first support surface and the second support surface, an opening between the third support surface and the fourth support surface, and an opening of the groove,
the base part is formed with screw holes for fastening the end cover at substantially symmetric positions at the left and right of a centerline of the opening of the groove and the width direction of the base part, and
the end cover is formed with two holes symmetric to the left and right of a centerline in the width direction of the end cover corresponding to the screw holes and the opening of the groove.

9. A fastening method using a fastening device according to any one of claims 1 to 8 to fasten a solar cell module, the fastening method comprising
arranging the solar cell module at the second support surface of the second module support part and
making the base part move, using the guide member, in a substantially parallel direction to the first and second support surfaces, inserting the solar cell module between the first support surface and the second support surface, and fastening the solar cell module.

10. A fastening structure which fastens a consecutively arranged plurality of solar cell modules, comprising
a mounting frame which holds pairs of side parts at mutually opposite sides of the solar cell modules and
at least one support member which is arranged at non-light receiving surface sides of the solar cell modules and supports a consecutive plurality of non-light receiving surfaces.

11. The fastening structure according to claim 10 which further comprises a plurality of beam members which fasten the mounting frame and the support member and
wherein the mounting frame and the support member are fastened spanning the plurality of beam members.

12. The fastening structure according to claim 11 wherein the support member has engagement pieces which abut against the beam members, and the beam members have clamping parts which clamp the engagement pieces.

13. The fastening structure according to any one of claims 10 to 12 wherein the support member is an elongated member and wherein the support member is arranged so that an axis of the support member is substantially parallel to the mounting frame.

14. The fastening structure according to any one of claims 10 to 13 wherein the support member is bonded to non-light receiving surfaces of the plurality of solar cell modules by a binder.

15. The fastening structure according to any one of claims 10 to 14 wherein the support member supports non-light receiving surfaces of the plurality of solar cell modules through buffer members.

16. The fastening structure according to any one of claims 10 to 15 wherein the mounting frame includes a fastening device according to any one of claims 1 to 8.
